# EUROPÄISCHE PATENTSCHRIFT

(11) **EP 1 668 309 B1**
(45) Veröffentlichungstag und Bekanntmachung des Hinweises auf die Patenterteilung: **05.10.2011**
(21) Anmeldenummer: 04786850.0
(22) Anmeldetag: 24.09.2004
(51) Int. Cl.: F41H 7/04, F41H 7/02

(54) **MODULARES SCHUTZRAUMSYSTEM, INSBESONDERE ZUM TRANSPORT VON PERSONEN UND/ODER GEGENSTÄNDEN**
MODULAR SHELTER SYSTEM, IN PARTICULAR FOR TRANSPORTING PERSONS AND/OR OBJECTS
SYSTEME DE CHAMBRE BLINDEE MODULAIRE, CON U EN PARTICULIER POUR TRANSPORTER DES PERSONNES ET/OU DES OBJETS

(30) Priorität: 26.09.2003 DE 20315057 U
(43) Veröffentlichungstag der Anmeldung: 14.06.2006
(73) Patentinhaber: Deisenroth, Ulf, 53797 Lohmar (DE)
(72) Erfinder: DEISENROTH, Ulf, D-53797 Lohmar (DE); BOMBIEN, Frank-Ulrich, D-53721 Siegburg (DE)
(74) Vertreter: Rumrich, Gabriele
(86) Internationale Anmeldenummer: PCT/DE2004/002134
(87) Internationale Veröffentlichungsnummer: WO 2005/031245

(56) Entgegenhaltungen:
- EP-A- 0 828 134
- EP-A- 1 293 747
- WO-A-03/004958
- WO-A1-01/57429
- CH-A- 338 392
- DE-A1- 1 950 108
- DE-A1- 2 021 835
- DE-B- 1 086 536
- DE-B- 1 138 593
- FR-A- 1 525 095

## Beschreibung

Die Erfindung betrifft ein modulares Schutzraumsystem, insbesondere zum Transport von Personen und/oder Gegenständen nach dem Oberbegriff des ersten Patentanspruchs.

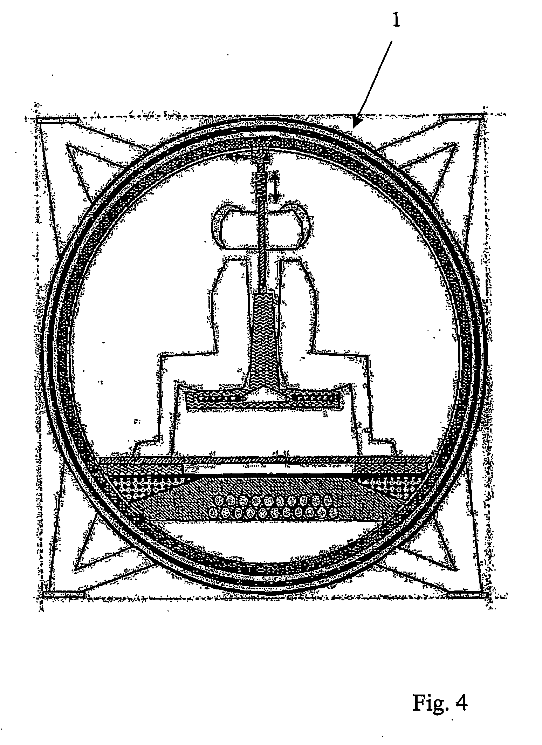

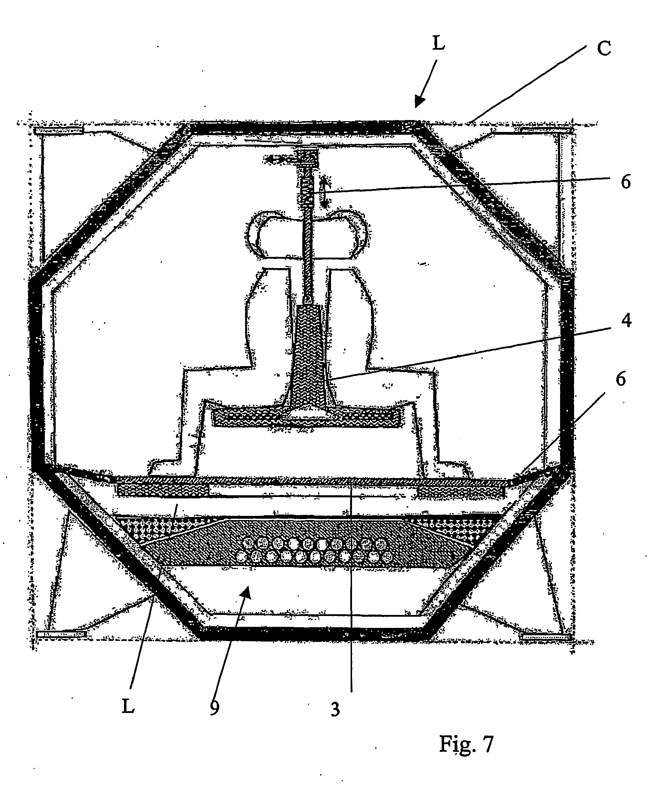

Nach DE 197 54 708 A1 ist ein Militärfahrzeug zur Personenbeförderung bekannt, mit einem im hinteren Teil des Fahrzeuges angeordneten Mannschaftsraum. Die Form des Mannschaftscontainers ist im Schnitt entlang zur Fahrzeuglängsrichtung in wesentlichen Rechteckig und im Schnitt quer zur Fahrzeuglängsrichtung zuerst sich linear erweiternd und dann nach unten verjüngend ausgebildet. Die im Mannschaftscontainer befindlichen Sitze sind aus einer Einstiegsposition in eine Transportposition schwenkbar und auf Konsolen montiert, die auf dem Fahrzeugboden befestigt sind. Wie aus Fig. 4 und 7 erkennbar, bildet der Fahrzeugboden auch die Standfläche für die darin befindlichen Personen. Der entscheidende Nachteil dieser Lösung besteht darin, dass bei einer Detonation aus dem Bodenbereich des Fahrzeuges, die sich darin befindlichen Personen durch den sich in den Mannschaftsraum wölbenden Boden stark gefährdet sind.

Ein mobiler Container mit einem Arbeitsraum und einem Maschinenraum ist aus DE 100 35 563 C2 bekannt. Dabei ist der Container quaderförmig ausgebildet, wodurch das gleiche Problem wie bei der vorgenannt aufgeführten Lösung zu verzeichnen ist. Über die Ausführung des Gehäuses zur Gewährleistung gegen äußere Bedrohungen wurden keine Ausführungen gemacht. Es ist jedoch aus den Zeichnungen ersichtlich, dass dazu offensichtlich keine besonderen Vorkehrungen getroffen wurden.

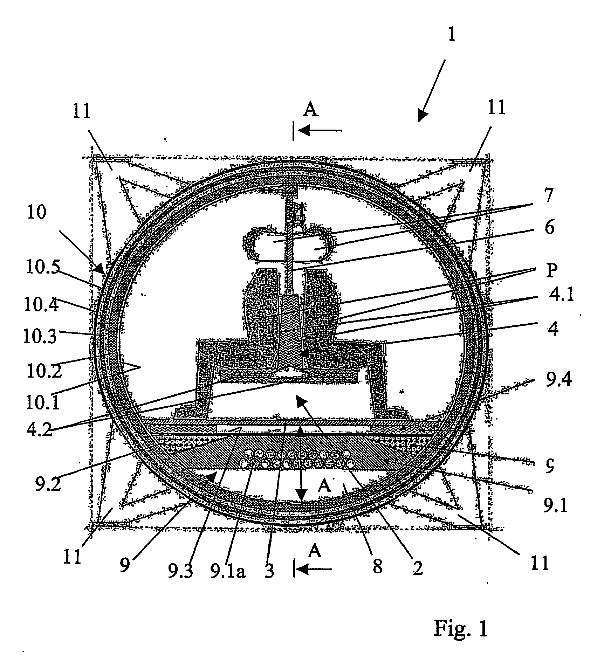

Ein spezieller Gehäuseaufbau für gepanzerte Fahrzeuge wird in DE 36 35 741 C1 beschrieben, wobei eine Vielzahl nichtmetallischer Panzerplatten aus faserverstärktem Kunststoff an einem Tragrahmen mittels Klemmleisten befestigt ist. Damit werden gem. Fig. 1 Gehäuse mit kubischem oder quaderförmigem Aufbau, auf jeden Fall immer mit flächigen Seitenelementen-, Decken- und Bodenelementen, hergestellt. Ebenfalls ein Gehäuse zum ballistischen Schutz wird in EP 0631 659 B1 vorgestellt. Dabei erfolgt die Befestigung der Platten an Profilschienen über Keile. Auch hier sind nur Gehäuse mit flächigen Seitenelementen herstellbar.

In WO 03/004958, Basis für Anspruch 1, ist ein ebenfalls rechteckige Seiten-, Decken- und Bodenelementen aufweisendes Militärpersonenfahrzeug/- aufenhaltsraum offenbart. Es ist in der Form eines Frachtcontainers ausgeführt, wobei mehrteilige Stütz- und/oder Hängevorrichtungen für die Sitzgelegenheiten und/oder Aufstellteile der Sitzgelegenheiten vorgesehen sind. Dabei ist zwischen einem auf dem Boden des Containers aufruhenden Fuß oder Stuhlbein und dem am Sitz befestigten Teil und/oder einem an der Decke oder einer Wand befestigten Teil mindestens eine Sollbruchstelle, eine Abrissverbindung oder ein Abrissbolzen vorgesehen, die/der bei Ausbildung einer Druckwelle anspricht und die Verbindung der Teile löst.

Auch diese technische Lösung ist ebenso wie die vorgenannten Ausführungen für viele Einsatzfälle ungeeignet.

Aufgabe der Erfindung ist es, ein modulares Schutzraumsystem, insbesondere zum Transport von Personen und Gegenständen, zu entwickeln, welches einen zuverlässigen Schutz vor äußeren militärischen oder terroristischen Angriffen und auch gegen verschiedenste Minen gewährleistet und welches einfach unterschiedlichen Einsatzzwecken anpassbar und kombinierbar ist.

Diese Aufgabe wird mit den kennzeichnenden Merkmalen des ersten Patentanspruchs gelöst, vorteilhafte Ausbildungen ergeben sich aus den Unteransprüchen.

Das modulare Schutzraumsystem dient insbesondere zum Transport von Personen und/oder Gegenständen und besteht aus einem Gehäuse und einem darin angeordneten, vom Boden entkoppelt gelagerten Aufnahmesystem. Erfindungsgemäß ist das Gehäuse kapselartig ausgebildet und zumindest teilweise durch Wickeltechnik gefertigt und weist zumindest an seiner Unterseite eine, die Deflektion von Blastwellen gewährleistende, Form auf. Dies wird dadurch gewährleistet, dass zwischen dem Aufnahmesystem und dem Boden des Gehäuses ein Abstand/Zwischenraum vorhanden ist, in welchem eine feste und/oder schock- und/oder energie- und/oder projektilresistente Struktur bzw. Strukturen angeordnet ist/sind.

Dazu weist die Struktur eine Versteifungsstruktur in Form eines Bodenträgers in Form einer Rahmenstruktur und/oder energieabsorbierende und/oder stoßabsorbierende bzw, projektilresistente Elemente auf. Die Versteifungsstruktur ist bevorzugt auf Basis von Aluminium, Magnesium, Stahl, Faserverbundstrukturen oder Kombinationen daraus in homogener oder perforierter Ausführung gefertigt; die energieabsorbierenden und/oder stoßabsorbierenden Elemente bestehen vorzugsweise aus Faserverbundwerkstoffen, Elastomeren, Schäumen, Wabenstrukturen, nachwachsenden Rohstoffen (z.B. Holz, Kork, usw.) oder Kombinationen daraus.

Die Anordnung der Versteifungsstrukturen erfolgt in Richtung zum Gehäuse und die Anordnung der energieabsorbierenden und/oder projektilresistenten Elemente in Richtung zum Innenraum des Gehäuses oder umgekehrt. Es können sich auch Versteifungsstrukturen und energieabsorbierenden und/oder stoßabsorbierenden Elemente abwechseln.

Das Aufnahmesystem wird mittels eines Befestigungssystems lagebestimmt, welches am Gehäuse über dem Abstand/ Zwischenraum zwischen Aufnahmesystem und dem Boden angreift. Das Aufnahmesystem weist ein Grundelementleine Grundplatte und bedarfsweise ein oder mehrere Sitze auf. Jeder Sitz ist über das Befestigungssystem am Gehäuse angebunden.

Das Befestigungssystem wird durch eine oder mehrere im oberen oder seitlichen Bereich des Gehäuses angelenkte erste

Befestigungselemente/Streben gebildet, welche eine Verbindung zu den Sitzen aufweisen.

Alternativ ist es möglich, das Befestigungssystem durch eine oder mehrere im oberen oder seitlichen Bereich des Gehäuses angelenkte zweite Befestigungselemente/Streben auszubilden, welche eine Verbindung zu dem Grundelemerit/der Grundplatte aufweisen.

Das Befestigungssystem kann in ein oder mehreren Freiheitsgraden elastisch und stoßabsorbierend ausgebildet sein. Zusätzlich können die Sitze am Befestigungssystem federnd aufgenommen werden.

Das Grundelement/die Grundplatte kann direkt oder über eine Zwischenschicht auf den Strukturen aufliegen. Alternativ kann auch eine Lagerung der Grundplatte über die Befestigungselemente erfolgen.

Generell sollte das Grundelement/die Grundplatte nicht direkt am Gehäuse anliegen.

Es werden vorteilhafter Weise schock- und energieabsorbierende Sitze eingesetzt, wobei jeweils zwei Sitze mit ihren Rückenlehnenbereichen aneinander anliegen und voneinander wegweisende Sitzflächen aufweisen können.

Bevorzugt werden die ersten Befestigungselemente an den Rückenlehnen und am darüber liegenden Bereich des Gehäuses befestigt.

Die Sitzflächen sind in Sitzhöhe über dem Grundelement/der Grundplatte angeordnet.

Die containerförmigen Gehäuse können zusätzlich mit Sichtmitteln (direkte oder indirekte, z.B. Fenster, Teleskope, Winkelspiegel, elektronische Sichtmittel), Ausrüstungen zur Selbstverteidigung (Nebelmittel, Wurfanlagen, Waffenstation - die unter Schutz bedienbar ist -, Schießbereiche), Klimaanlage, Notstromversorgung, ABC-Schutzanlage, Brandschutzanlage usw. ausgerüstet sein.

Zur Gewährleistung einer variablen Ausstattung sind die Sitze und/oder das Befestigungssystem leicht demontierbar.

Die containerförmigen Gehäuse sind somit einfach umrüstbar, z.B. als Personentransportcontainer, Kommunikationsfunkcontainer, medizinische Station, Energieerzeugungscontainer, Container zur Trinkwasseraufbereitung, Gefechtsstandeinrichtung, Material- oder Munitionstransportcontainer, Wohn-, Schlaf- oder Sanitärcontainer.

Jedes Gehäuse weist zumindest an einer Seite eine Tür/ein Türsystem oder eine Durchgangsöffnung auf, wobei die Tür/das Türsystem blastresistent ist und/oder eine redundante Notausstiegsfunktion aufweist.

Vorzugsweise wird jeweils eine Tür/ein Türsystem oder Durchgangsöffnung an einer oder beiden Endseiten/Polseiten jedes Gehäuse angeordnet.

Das Gehäuse weist im vertikal und rechtwinklig zu seiner Längsachse verlaufenden Schnitt einen kreisförmigen, ovalen oder sechseckigen Querschnitt oder eine Kombination aus Konturen mit sphärisch gekrümmten Bereichen und ebenen Bereichen auf und besteht aus Faserverbundwerkstoff, metallischem Werkstoff, Beton oder Kombination daraus. Weiterhin können in das Gehäuse Wabenstrukturen, Schäume oder nachwachsende Rohstoffe (z.B. Holz, Kork, usw.) integriert sein.

Es können Faserverbundwerkstoffe auf Basis von Glas-, Aramid-, Carbon-, Polyester-, Polyethylen-, Polypropylen- Werkstoffen oder Hybriden oder deren Kombinationen unter Verwendung thermoplastischer oder duropfastischer Binder eingesetzt werden, deren Faserstruktur als 2D oder 3D Gewebe, Gelege, Gestricke oder Gewirke aufbaubar ist.

Als metallische Strukturen der Gehäusewand sind z.B. folgende Werkstoffe oder deren Kombinationen einsetzbar:
- Stähle, z.B. hochfeste Stähle, Feinkornstähle, austenitische Stickstoffstähle, Manganstähle, Manganhartstähle, Panzerstahl;
- Aluminium, ballistisches Aluminium, Aluminiumlegierungen,
- Titan und Titanlegierungen.

Weiterhin können in den Aufbau der Gehäusewand energieabsorbierende Verbundstrukturen in Form von Wabenstrukturen, Nomexwaben, Schäume und nachwachsenden Rohstoffen sowie deren Kombinationen integriert sein.

Auch die Verwendung von Beton, bevorzugt ballistischer Beton, hochfester Stahlbeton oder Leichtbeton für das Gehäuse ist möglich.

Zum Schutz gegen alle äußeren Bedrohungen kann direkt oder im Abstand auf der/in der Wandung des Gehäuses eine Panzerung vorgesehen sein, die direkt auf einer Grundstruktur sitzt oder durch einen Spalt davon beabstandet ist. Es ist möglich, die Wandung des Gehäuses als derartige Grundstruktur auszubilden. Die Panzerung kann auch mit einem dahinter liegenden Liner (splitterunterdrückende Folie) kombiniert sein. Bevorzugt ist die Panzerung in Richtung zur Außenseite des Gehäuses angeordnet. Sie besteht z.B. aus Keramik oder einer Keramikverbundstruktur, metallischen Werkstoffen oder Faserverbundwerkstoffen oder entsprechenden Kombinationen und kann als passive oder reaktive Panzerung ausgebildet sein. Auch der Einsatz aktiver modularer Schutzraumsysteme ist möglich.

Bevorzugt wird dabei eine Gehäuseform mit kreisförmigem Querschnitt verwendet, da von dieser Form eine höhere Widerstandsfähigkeit gegen Blastbelastungen zu erwarten ist, da durch diese Gehäuseform die Blastwellen deflektiert werden. Im Vergleich zu Behältern mit rechteckigem Querschnitt kann durch das erfindungsgemäße zylindrische Konzept das Gewicht und die Angriffsfläche um ca. 20% reduziert werden. Dabei erfolgt die Hauptenergieaufnahme durch Blast, Projektile und Minen bevorzugt über äußerüch zurüstbare/ggf. auswechselbare Module. Dies bietet eine hohe Flexibilität in taktischer Hinsicht, da das modulare Schutzraumkonzept den jeweilige taktischen Einsatzsituationen angepasst werden kann. Die Behältergrundstruktur dient dann lediglich zur Aufnahme der "Restenergie". Das Gehäuse kann auf der Basis eines gegossenen, geschweißten, in Wickeltechnik erzeugten Gehäuses hergestellt werden.

Die Gehäuse können dabei an ihrer Außen- und/oder Innenseite mit zusätzlichen metallischen und/oder nichtmetallischen Schichten versehen sein und die Grundstruktur für Befestigung der Panzerung bilden.

Insgesamt kann das Gehäuse einen mehrschichtigen Aufbau aus einer Kombination von Panzerung, harte Stoßbelastungen aufnehmenden sowie energieabsorbierenden Strukturen aufweisen. Es bietet somit Schutz gegen sämtliche verschiedene Bedrohungen und militärische sowie terroristische Angriffe, ausgehend von kleinkalibriger Munition bis zu Panzerabwehrwaffen und Flugkörpern mit Hohlladungsgefechtkörpern, dabei unter anderem auch gegen Splitter aus Mörser und Artilleriegranaten.

Es wird insgesamt mit diesem neuartigen Schutzraumkonzept ein direkter Schutz ab 14,5mm Hartkern-Projektilen und höher, ein zuverlässiger Minenschutz gegen Blast-Projektile und eine hervorragende Abwehr terroristischer Ladungen, bei welchen meist große Mengen Sprengstoff und Splitterladungen von der Seite eingesetzt werden, gewährleistet.

Insbesondere durch die Entkopplung des Aufnahmesystems in Richtung zum Boden des Gehäuses durch einen Abstand/Zwischenraum zwischen dem Aufnahmesystem und dem Boden des Gehäuses, in welchem eine feste und/oder schock- und/oder energie- und/oder stoßabsorbierende Struktur bzw. Strukturen angeordnet ist, wird ein hervorragendes modulares Schutzraumsystem gegen Minen (z.B. Blastminen mit und ohne Splitterwirkung, projektilbildende Minen zur Panzerabwehr, Blastladungen mit terroristischem Hintergrund wie Autobomben oder Kofferbomben mit und ohne Splitterwirkung) geschaffen. Die Detonationswirkung, die meist auf den unteren Bereich des Gehäuses trifft, wird von den Strukturen aufgenommen und absorbiert, so dass die auf dem Aufnahmesystem befindlichen Personen und/oder Gegenstände nicht gefährdet sind. Weiterhin wird ein Teil der Stoßwellen insbesondere durch eine Gehäusewandung mit sphärisch gekrümmter Kontur deflektiert.

Es ist weiterhin möglich, das Gehäuse mit einer Radar- und Infrarotabschirmung sowie mit einer elektromagnetischen Abschirmung zu versehen.

Das Gehäuse ist entweder Teil eines Fahrzeuges oder von einem Fahrzeug aufnehmbar. Dazu ist außen am Gehäuse ein Tragegestell oder eine Rahmenstruktur mit Transportaufnahmen befestigbar, welche(s) dessen direkte Aufnahme auf einem Fahrzeug oder einem herkömmlichen Container bzw. Containertransportfahrzeug gestattet.

Im Rahmen des modularen Schutzraumsystems ist es möglich, mehrere containerförmige Gehäuse direkt untereinander oder über Adapterelemente miteinander zu koppeln. Jedes Adaptersystem weist dabei bevorzugt drei oder vier Andockpositionen auf, die zum angrenzenden Gehäuse geöffnet oder verschließbar sein können. Dadurch ist es möglich, Container mit verschiedenen Ausstattungen und Funktionen variabel in Ausstattung und Anzahl miteinander zu einem komplexen Schutzraumsystem zu kombinieren. Mit der Erfindung wird ein neuartiges modulares Schutzraumkonzept geschaffen, welches in höchstem Maße die Sicherheit der darin befindlichen Personen und Gegenstände bei militärischen und terroristischen äußeren Angriffen gewährleistet und durch seine Umrüstbarkeit und den variablen Aufbau unterschiedlichsten Einsatzzwecken anpassbar ist.

Die Erfindung wird nachfolgend anhand von Ausführungsbeispielen und zugehörigen Zeichnungen näher erläutert. Es zeigen:
Fig. 1 und 2: Gehäuse mit kreisförmigem Querschnitt,
Fig. 3: Längsschnitt gem. Fig. 1 durch das Gehäuse,
Fig. 4: Gehäuse mit elliptische Querschnitt,
Fig. 5: Gehäuse mit nach unten und oben sphärisch gekrümmter Oberfläche und abgeflachten Längsseiten,
Fig. 6: Gehäuse mit im Querschnitt nach unten sphärisch gekrümmter Oberfläche und nach oben sich verjüngender trapezförmiger Kontur,
Fig. 7: Gehäuse mit sechseckigem Querschnitt,
Fig. 8a bis 8d: Kombinationsmöglichkeiten mehrerer Gehäuse,
Fig. 9a bis 9d: Kombination mehrerer Gehäuse unter Verwendung eines Adaptersystems.

Gem. Fig. 1 weist das Gehäuse 1 einen kreisförmigen Querschnitt auf. Das Aufnahmesystem 2 besteht aus einer Grundplatte 3 auf welcher Sitze 4 über Verbindungselemente 5 befestigt sind. Jeweils zwei Sitze 4 grenzen mit ihren Rückenlehnenbereichen 4.1 aneinander und weisen voneinander wegweisende Sitzflächen 4.2 auf. Die Rückenlehnen 4.1 sind über Befestigungselemente/Streben 6 am darüber liegenden Bereich des Gehäuses 1 befestigt. An den Streben 6 ist ein Kopfschutz 7 vorgesehen. Die Sitzflächen 4.2 befinden sich in Sitzhöhe über der Grundplatte 3. Von den Sitzen 4 sind Personen P aufgenommen, welchen die Grundplatte 3 als Trittfläche und zum Abstützen der Füße dient. In Richtung zur Oberseite des Gehäuses 1 ist genügend Kopffreiheit vorhanden.

Unter der Grundplatte 3 ist in dem durch deren Abstand A von der Unterseite des Gehäuses 1 gebildeten Raum 8 eine Struktur 9 vorhanden, die es gestattet die bei einer Detonation unter dem Gehäuse sich ausbildende Deformation aufzunehmen. Dies kann zusätzlich durch feste und/oder energie- und/oder stoßabsorbierende Struktur 9 in hohem Maße erreicht werden. Dadurch sind die Personen P in ihrer Aufnahmeposition geschützt.

Die Struktur 9 besteht hier aus einem Bodenträger 9.1 aus Aluminium (alternativ Magnesium und/oder Faserverbundstrukturen) mit gewichtssparender Perforation 9.1 a, welcher an der Innenseite des Gehäuses 1 aufliegt und sich nach oben im Querschnitt verjüngt. Der beidseitig zur Verjüngung gebildete Bereich ist mit Hartschaum 9.2 gefüllt. Der Hartschaum 9.2 und der Bodenträger 9.1 sind von einer Platte 9.3 (alternativ einer Folie) abgedeckt. Über der Platte 9.3 ist eine metallische Waben-Struktur 9.4 angeordnet (alternativ kann auch eine Schaumstruktur verwendet werden). Anstelle dieses Strukturaufbaues sind auch andere Varianten in Reihenfolge und Materialauswahl möglich, die hier nicht näher beschrieben sind. Gem. dieses Ausführungsbeispiels sitzt die Grundplatte 3 direkt auf der Struktur 9. Der Aufbau der Gehäusewandung 10 des Gehäuses 1 ist von innen nach außen folgender:
- schallisolierender Bezug 10.1,
- erste Schicht aus glasfaserverstärktem Kunststoff 10.2, gewickelt,
- Waben-Struktur 10.3, (metallisch oder nichtmetallisch oder Schaumstruktur)
- zweite Schicht aus glasfaserverstärktem Kunststoff 10.4,
- Schutz gegen Projektile, Minen und Blastladungen 90.5.

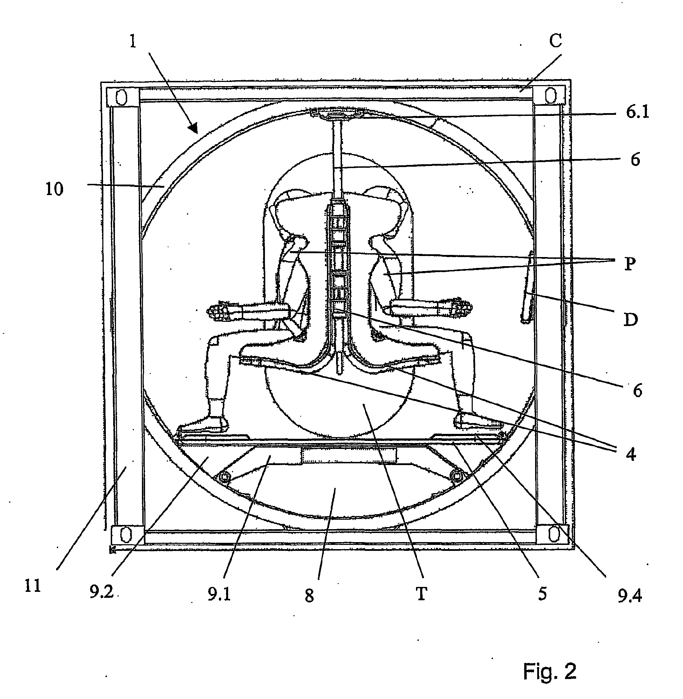

Am Außendurchmesser des Gehäuses 1 ist ein Tragegestell oder eine Rahmenstruktur 11 mit Transportaufnahmen zur Aufnahme in einem gestrichelt angedeuteten Standardcontainer 12 vorgesehen. Einen fast identischen Aufbau weist das modulare Schutzsystem gem. Fig. 2 auf. Der Bodenträger 9 ist hier jedoch nicht perforiert ausgebildet und die Wabenstruktur 9.4 sitz über der Bodenplatte 5. Weiterhin ist an der Rückseite/Vorderseite des Gehäuses 1 eine Tür oder eine Türöffnung T angedeutet. Es ist weiterhin schematisch dargestellt, dass im Innenraum des Gehäuses 1 Displays D angeordnet sein können. Neben entsprechenden Anzeigeelementen können die Gehäuse 1 selbstverständlich mit den verschiedensten Ausrüstungen ausgestattet sein. Die Befestigungselemente 6 für die Sitze 4 sind mittels eines Adaptersystems 6.1 am Gehäuse 1 befestigbar und dadurch leicht auswechselbar.

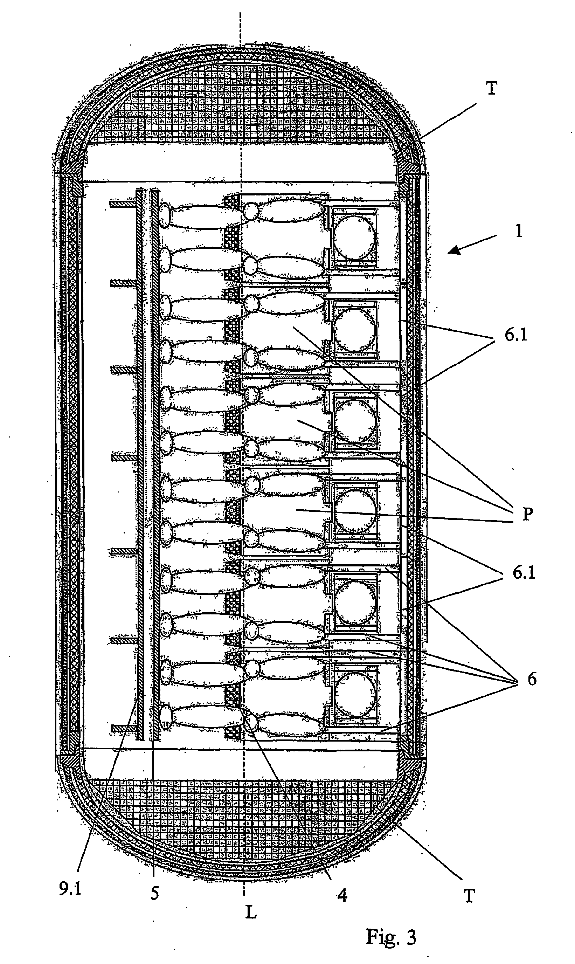

Den Schnitt A-A entlang der Längsachse L des Gehäuses 1 (ohne Rahmenstruktur 11 mit Transportaufnahmen und Container) gem. Fig. 1 zeigt Fig. 3. Es sind in Längsrichtung des Gehäuses 1 mehrere Sitze 4 (in diesem Fall 6 paarweise in Reihe hintereinander) angeordnet. Die Sitze 4 sind über die Streben 6 am Adaptersystem 6.1 befestigt. An beiden Endseiten des Gehäuses 1 befinden sich Türen T, die eine nach außen konvex gewölbte Form besitzen und eine Schichtstruktur aufweisen, die der des Gehäuses 1 entspricht. Die Türen 1.1 sind dabei abnehmbar ausgebildet.

Es ist aus dieser Garstellung die spantenartige Ausbildung des Bodenträgers 9.1 entnehmbar. Die anderen Bestandteile der Struktur (Hartschaum 9.2, Platte 9.3 Aluminium-Waben-Struktur 9.4) sind hier aus Gründen der Übersichtlichkeit ebenfalls nicht dargestellt.

Insbesondere durch allseitig konvex gekrümmte Oberfläche wird ein äußerst zuverlässiger Schutz gegen verschiedene Bedrohungen gesichert, da die Deflektion von Blastwellen, gewährleistet ist, unabhängig davon, aus welcher Richtung die Geschosse oder Detonationen auftreffen.

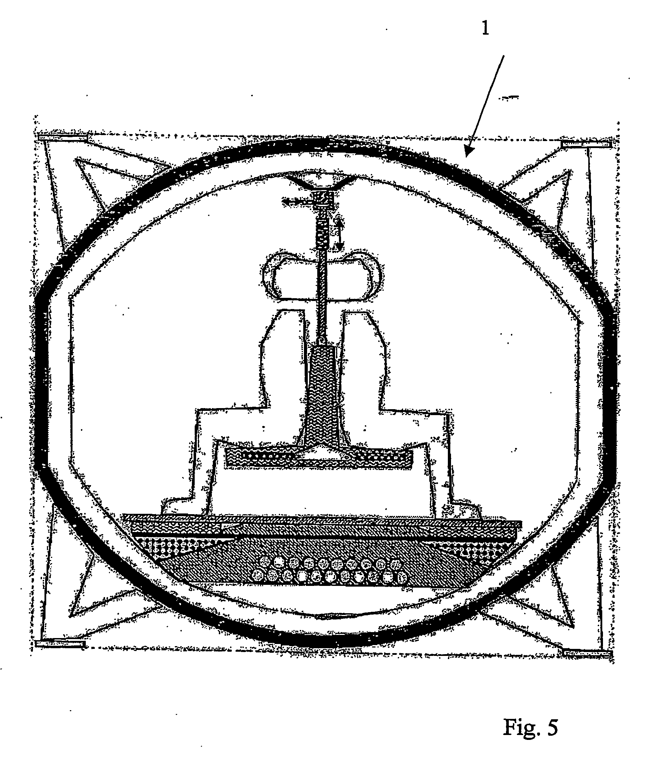

Ein Gehäuse 1 mit identischem Aufbau und gleicher Ausstattung wie in Fig. 1 und 2, jedoch mit ovalem Querschnitt ist in Fig. 4 und ein Gehäuse 1 mit nach unten und oben sphärisch gekrümmter Oberfläche und abgeflachten Seiten in Figur 5 dargestellt.

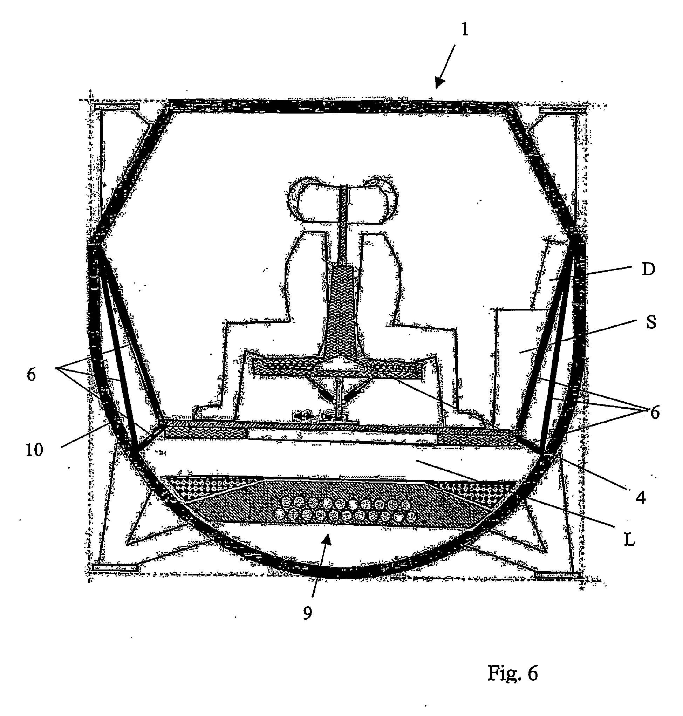

Ein Gehäuse 1 mit im Querschnitt nach unten sphärisch gekrümmter Oberfläche und nach oben sich verjüngender trapezförmiger Kontur zeigt Fig. 6. Die Grundplatte 3 ist hier von der Struktur 9 um einen Luftspalt L beabstandet und über Befestigungselemente 6, die strebenförmig ausgebildet sind, im seitlichen Bereich des Gehäuses 1. Die Befestigung das Sitzes 4 an dessen Lehne 1.1 oben am Gehäuse 1 kann damit entfallen. Zwischen den zweiten Befestigungselementen 6.2 und der Gehäusewandung 10 ist energieabsorbierendes Material (nicht dargestellt) vorgesehen. Ebenfalls können im Gehäuse 1 Display D und Schrank- und/oder Ablageelemente S vorgesehen sein.

Ein Gehäuse 1 mit sechseckigem Querschnitt zeigt Fig. 7. Auch hier ist die Grundplatte 3 von der Struktur 9 um einen Luftspalt L beabstandet. Die Lagefixierung der Grundplatte 3 und der Sitze 4 erfolgt über an den Sitzlehnen 4.1 und an der Grundplatte 3 angeordnete Befestigungsmittel 6, die jeweils mit dem Gehäuse 1 verbunden sind.

Diese "schwebende" Lagerung des Aufnahmesystems gem. Fig. 6 und 7 bietet zusätzliche Sicherheit.

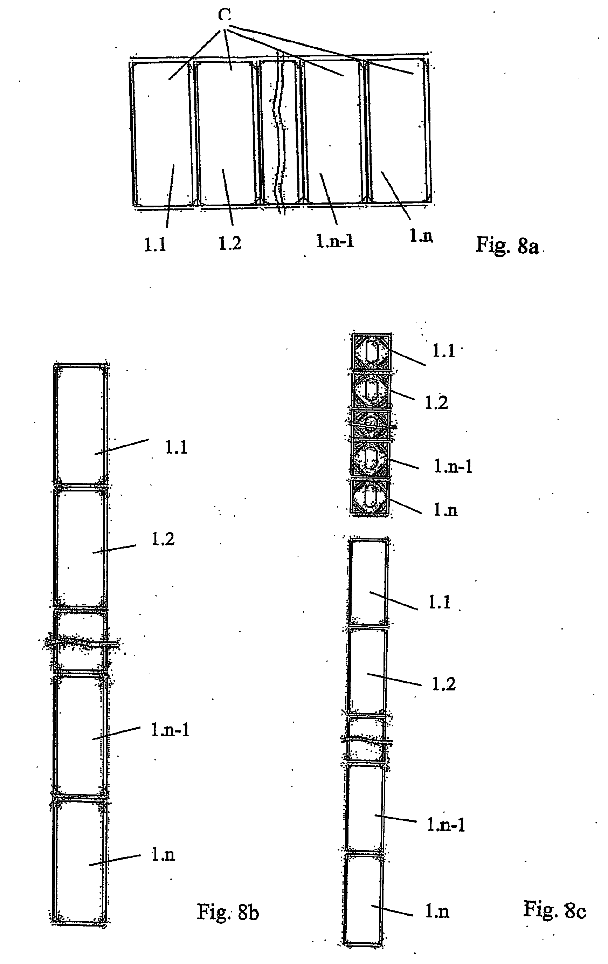

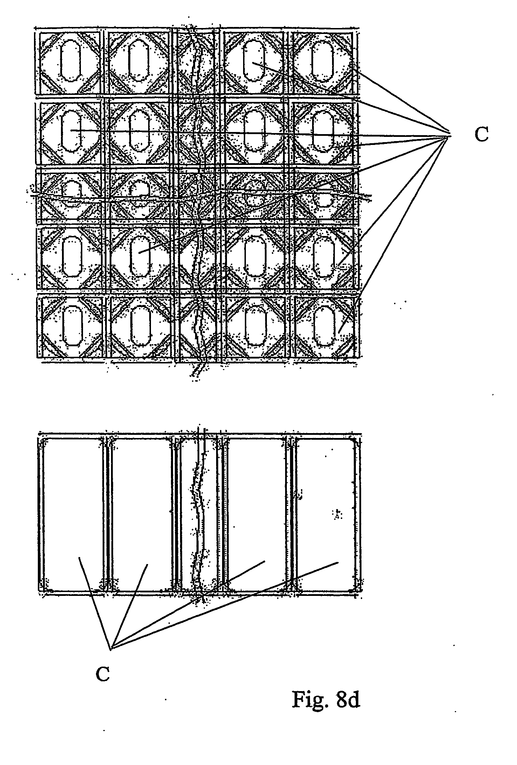

Die Kombination mehrerer Gehäuse ist in Fig. 8a bis 8d dargestellt. Es können mehrere in Containern C angeordnete Systeme 1.1, 1.2, 1.n usw. neben und/oder übereinander gestapelt werden und sind über die Türöffnungen untereinander begehbar.

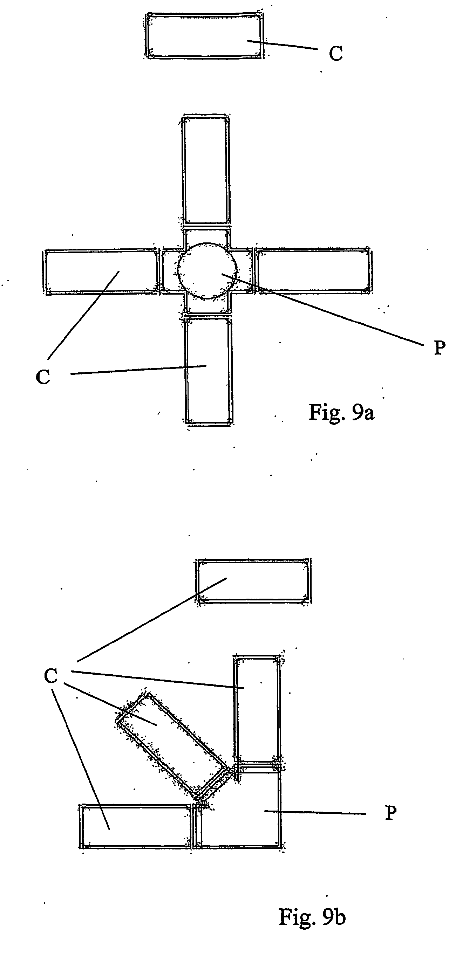

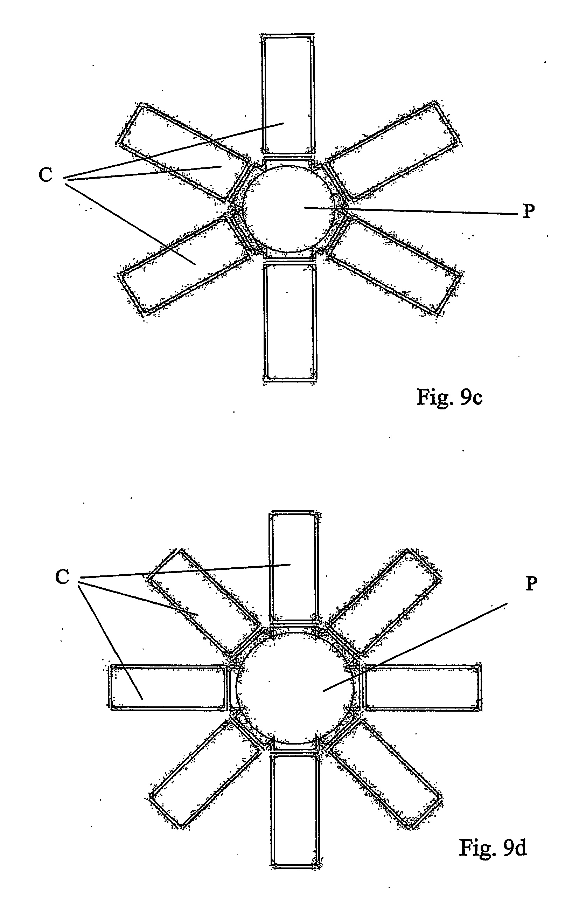

Weiterhin kann unter Verwendung eines Adaptersystems P gem. Fig. 9a bis 9d ein modularer Aufbau und die Kombination von Containern/Gehäusen 1.1, 1.2, 1.n usw. zu einem hervorragenden komplexen Schutzraumsystem geschaffen werden.

## Patentansprüche

1. Modulares Schutzraumsystem, insbesondere zum Transport von Personen (P) und/oder Gegenständen, bestehend aus einem Gehäuse (1) und einem darin angeordneten, vom Boden entkoppelt gelagerten, Aufnahmesystem (2), **dadurch gekennzeichnet, dass** das Gehäuse (1) kapselartig ausgebildet und zumindest teilweise durch Wickeltechnik gefertigt ist und zumindest an seiner Unterseite eine, die Deflektion von Blastwellen gewährleistende, Form aufweist.

2. Modulares Schutzraumsystem nach Anspruch 1, **dadurch gekennzeichnet, dass** das Gehäuse (1) im vertikal und rechtwinklig zu seiner Längsachse verlaufenden Schnitt einen kreisförmigen, ovalen oder sechseckigen Querschnitt oder eine Kombination aus Konturen mit sphärisch gekrümmten Bereichen und ebenen Bereichen aufweist.

3. Modulares Schutzraumsystem nach Anspruch 1 oder 2, **dadurch gekennzeichnet, dass** mehrere kapselartige Gehäuse (1) direkt oder über Adapterelemente miteinander koppelbar sind.

4. Modulares Schutzraumsystem nach einem der Ansprüche 1 bis 3, **dadurch gekennzeichnet, dass** jedes Gehäuse (1) zumindest an einer Seite eine Tür (T) lein Türsystem oder eine Durchgangsöffnung aufweist.

5. Modulares Schutzraumsystem nach Anspruch 4, **dadurch gekennzeichnet, dass** die Tür (T) / das Türsystem blastresistent ist und/oder eine redundante Notausstiegsfunktion aufweist.

6. Modulares Schutzraumsystem nach einem der Ansprüche 1 bis 5, **dadurch gekennzeichnet, dass** das Gehäuse (1) aus Faserverbundwerkstoff, metallischem Werkstoff, Beton oder Kombination daraus gefertigt ist.

7. Modulares Schutzraumsystem nach einem der Ansprüche 1 bis 6, **dadurch gekennzeichnet, dass** in das Gehäuse (1) Waben(10.3)-Srukturen, Schäume oder nachwachsende Rohstoffe integriert sind.

8. Modulares Schutzraumsystem nach einem der Ansprüche 1 bis 7, **dadurch gekennzeichnet, dass** das Gehäuse (1) gepanzert ist.

9. Modulares Schutzraumsystem nach einem der Ansprüche 1 bis 8, **dadurch gekennzeichnet, dass** das Gehäuse (1) Teil eines Fahrzeuges oder von einem Fahrzeug aufnehmbar ist.

10. Modulares Schutzraumsystem nach Anspruch 9, **dadurch gekennzeichnet, dass** das Gehäuse (1) eine Aufnahmeeinrichtung zur Aufnahme auf einem Fahrzeug oder in einem Container (C) aufweist.

11. Modulares Schutzraumsystem nach einem der Ansprüche 1 bis 10. **dadurch gekennzeichnet, dass** zwischen dem vom Boden des Gehäuses (1) entkoppelten Aufnahmesystem (2) und dem Boden des Gehäuses (1) ein Abstand (A)/Zwischenraum vorhanden ist.

12. Modulares Schutzraumsystem nach Anspruch 11, **dadurch gekennzeichnet, dass** in dem Abstand (A)/Zwischenraum feste und/oder schock- und/oder energie- und/oder stoßabsorbierende Strukturen (9) angeordnet sind.

13. Modulares Schutzraumsystem nach Anspruch 12, **dadurch gekennzeichnet, dass** die Strukturen (9) eine Versteifungsstruktur in Form eines Bodenträgers (9.1) oder in Form einer Rahmenstruktur (11) aufweisen.

14. Modulares Schutzraumsystem nach Anspruch 13, **dadurch gekennzeichnet, dass** die Versteifungsstruktur auf Basis von Aluminium, Magnesium, Stahl, Faserverbundstrukturen oder Kombinationen daraus in homgener oder perforierter Ausführung gefertigt ist.

15. Modulares Schutzraumsystem nach einem der Ansprüche 12 bis 14 **dadurch gekennzeichnet, dass** das Aufnahmesystem (2) über den Strukturen (9) mittels eines Befestigungssystems lagebestimmt wird, welches am Gehäuse (1) oberhalb des Abstandes (A)/Zwischenraumes zwischen Aufnahmesystem (2) und dem Boden angreift.

16. Modulares Schutzraumsystem nach einem der Ansprüche 1 bis 15, **dadurch gekennzeichnet, dass** das Aufnahmesystem (2) ein Grundelementleine Grundplatte (3) aufweist.

17. Modulares Schutzraumsystem nach einem der Ansprüche 1 bis 16, **dadurch gekennzeichnet, dass** das Aufnahmesystem (2) ein oder mehrere Sitze (4) aufweist.

18. Modulares Schutzraumsystem nach Anspruch 17, **dadurch gekennzeichnet, dass** jeder Sitz (4) einerseits mit dem Grundelement/der Grundplatte (3) verbunden ist und andererseits über das Befestigungssystem eine Verbindung zum Gehäuse (1) aufweist.

19. Modutares Schutzraumsystem nach Anspruch 17 oder 18, **dadurch gekennzeichnet, dass** das Befestigungssystem durch eine oder mehrere im oberen oder seitlichen Bereich des Gehäuses (1) angelenkte erste Befestigungselemente/Streben (6) gebildet wird, welche eine Verbindung zu den Sitzen (4) aufweisen.

20. Modulares Schutzraumsystem nach einem der Ansprüche 16 bis 19, **dadurch gekennzeichnet, dass** das Befestigungssystem durch eine oder mehrere im oberen oder seitlichen Bereich des Gehäuses (1) angelenkte zweite Befestigungselemente/ Streben (6) gebildet wird, welche eine Verbindung zu dem Grundelement/der Grundplatte (3) aufweisen.

21. Modulares Schutzraumsystem nach einem der Ansprüche 15 bis 20 **dadurch gekennzeichnet, dass** das Befestigungssystem in ein oder mehreren Freiheitsgraden stoßabsorbierend ausgebildet ist.

22. Modulares Schutzraumsystem nach einem der Ansprüche 17 bis 21, **dadurch gekennzeichnet, dass** die Sitze (4) am Befestigungssystem stoßabsorbierend aufgenommen sind.

23. Modulares Schutzraumsystem nach einem der Ansprüche 16 bis 22 **dadurch gekennzeichnet, dass** das Grundelement/die Grundplatte (3) auf den Strukturen (9) direkt oder über eine Zwischenschicht aufliegt.

24. Modulares Schutzraumsystem nach einem der Ansprüche 16 bis 23 **dadurch gekennzeichnet, dass** das Grundelement/die Grundplatte (3) nicht am Gehäuse (1) anliegt.

25. Modulares Schutzraumsystem nach einem der Ansprüche 17 bis 24, **dadurch gekennzeichnet, dass** die Sitze (4) schock- und energieabsorbierend ausgebildet sind.

26. Modulares Schutzraumsystem nach einem der Ansprüche 17 bis 25, **dadurch gekennzeichnet, dass** jeweils zwei Sitze (4) mit ihren Rückenlehnenbereichen (4.1) aneinander anliegen und voneinander wegweisende Sitzflächen (4.2) aufweisen.

27. Modulares Schutzraumsystem nach einem der Ansprüche 17 bis 26, **dadurch gekennzeichnet, dass** die Sitzflächen (4.2) der Sitze (4) in Sitzhöhe über dem Grundelement/der Grundplatte (3) angeordnet sind und die Verbindung zur Grundplatte (3) über stab- und/oder plattenförmige Verbindungselemente (5) erfolgt.

28. Modulares Schutzraumsystem nach einem der Ansprüche 17 bis 27, **dadurch gekennzeichnet, dass** die Sitze (4) und/oder das Befestigungssystem daraus entfernbar/demontierbar sind.

## Claims

1. A modular shelter system, in particular for the transport of persons (P) and/or objects, comprising a housing (1) and a receptacle system (2), which is situated therein and mounted so it is decoupled from the floor, **characterized in that** the housing (1) is implemented like a capsule and is at least partially manufactured by winding technology and has a shape which ensures the deflection of blast waves at least on its bottom side.

2. The modular shelter system according to Claim 1, **characterized in that** the housing (1) has, in vertical section running perpendicularly to its longitudinal axis, a circular, oval, or hexagonal cross-section or a combination of contours having spherically curved areas and planar areas.

3. The modular shelter system according to Claim 1 or 2, **characterized in that** multiple capsule-like housings (1) can be coupled to one another directly or via adapter elements.

4. The modular shelter system according to one of Claims 1 to 3, **characterized in that** each housing (1) has a door (T)/a door system or a through opening on at least one side.

5. The modular shelter system according to Claim 4, **characterized in that** the door (T)/the door system is blast resistant and/or has a redundant emergency exit function.

6. The modular shelter system according to one of Claims 1 to 5, **characterized in that** the housing (1) is manufactured from a fiber composite material, metallic material, concrete, or a combination thereof.

7. The modular shelter system according to one of Claims 1 to 6, **characterized in that** honeycomb (10.3) structures, foams, or renewable raw materials arc integrated in the housing (1).

8. The modular shelter system according to one of Claims 1 to 7, **characterized in that** the housing (1) is armored.

9. The modular shelter system according to one of Claims 1 to 8, **characterized in that** the housing (1) is part of a vehicle or can be accommodated by a vehicle.

10. The modular shelter system according to Claim 9, **characterized in that** the housing (1) has a receptacle device for accommodation on a vehicle or in a container (C).

11. The modular shelter system according to one of Claims 1 to 10, **characterized in that** a spacing (A)/intermediate space is provided between the receptacle system (2), which is decoupled from the floor of the housing (1), and the floor of the housing (1).

12. The modular shelter system according to Claim 11, **characterized in that** fixed and/or shock-absorbent and/or energy-absorbent and/or impact-absorbent structures (9) are situated in the spacing (A)/intermediate space.

13. The modular shelter system according to Claim 12, **characterized in that** the structures (9) have a reinforcement structure in the form of a floor girder (9.1) or in the form of a frame structure (11).

14. The modular shelter system according to Claim 13, **characterized in that** the reinforcement structure is manufactured on the basis of aluminum, magnesium, steel, fiber composite structures, or combinations thereof in a homogeneous or perforated embodiment.

15. The modular shelter system according to one of Claims 12 to 14, **characterized in that** the receptacle system (2) is determined with respect to location via the structures (9) by means of a fastening system, which engages on the housing (1) above the spacing (A)/intermediate space between the receptacle system (2) and the floor.

16. The modular shelter system according to one of Claims 1 to 15, **characterized in that** the receptacle system (2) has a base clement/a base plate (3).

17. The modular shelter system according to one of Claims 1 to 16, **characterized in that** the receptacle system (2) has one or more seats (4).

18. The modular shelter system according to Claim 17, **characterized in that** each seat (4) is connected, on the one hand, to the base element/the base plate (3) and, on the other hand, has a connection to the housing (1) via the fastening system.

19. The modular shelter system according to Claim 17 or 18, **characterized in that** the fastening system is formed by one or more first fastening elements/struts (6), which are linked in the upper or lateral area of the housing (1), and which have a connection to the seats (4).

20. The modular shelter system according to one of Claims 16 to 19, **characterized in that** the fastening system is formed by one or more second fastening elements/struts (6), which are linked in the upper or lateral area of the housing (1), and which have a connection to the base element/the base plate (3).

21. The modular shelter system according to one of Claims 15 to 20, **characterized in that** the fastening system is implemented as impact-absorbent in one or more degrees of freedom.

22. The modular shelter system according to one of Claims 17 to 21, **characterized in that** the seats (4) are received on the fastening system in an impact-absorbent manner.

23. The modular shelter system according to one of Claims 16 to 22, **characterized in that** the base element/the base plate (3) rests on the structures (9) directly or via an intermediate layer.

24. The modular shelter system according to one of Claims 16 to 23, **characterized in that** the base element/the base plate (3) does not press against the housing (1).

25. The modular shelter system according to one of Claims 17 to 24, **characterized in that** the seats (4) are implemented as shock-absorbent and energy-absorbent.

26. The modular shelter system according to one of Claims 17 to 25, **characterized in that** each two seats (4) press against one another at their backrest areas (4.1) and have seat surfaces (4.2) pointing away from one another.

27. The modular shelter system according to one of Claims 17 to 26, **characterized in that** the seat surfaces (4.2) of the seats (4) are situated at seat height over the base element/the base plate (3) and the connection to the base plate (3) is produced via rod-shaped and/or plate-shaped connecting elements (5).

28. The modular shelter system according to one of Claims 17 to 27, **characterized in that** the seats (4) and/or the fastening system can be removed/dismounted therefrom.

## Revendications

1. Système d'abri modulaire, en particulier pour le transport de personnes (P) et/ou d'objets, composé d'un caisson (1) et d'un système de réception (2) disposé à l'intérieur de ce dernier et non solidaire du fond, **caractérisé en ce que** le caisson (1) correspond à une capsule et est fabriqué, du moins partiellement, selon la technique d'enroulement et présente au moins sur son côté inférieur une forme assurant la déflection d'ondes de choc.

2. Système d'abri modulaire selon la revendication1, **caractérisé en ce que** le caisson (1) présente une section circulaire, ovale ou hexagonale dans sa coupe verticale ou rectangulaire par rapport à son axe longitudinal ou bien une combinaison de contours avec des zones sphériques courbées et des zones planes.

3. Système de caisson selon les revendications 1 ou 2, **caractérisé en ce que** plusieurs caissons (1) en forme de capsule peuvent être assemblés directement ou par la biais d'éléments d'adaptation.

4. Système de caisson selon l'une des revendications 1 à 3, **caractérisé en ce que** chaque caisson (1) présente une porte (T) / un système de porte ou une ouverture de passage sur au moins l'un de ses côtés.

5. Système d'abri modulaire selon la revendication 4, **caractérisé en ce que** la porte (T) / le système de porte est résistant aux chocs et/ou présente une fonction de sortie de secours redondante.

6. Système de caisson selon l'une des revendications 1 à 5, **caractérisé en ce que** le caisson (1) est fabriqué en matériaux composites renforcés par des fibres, en matériaux métalliques, en béton ou à partir d'une combinaison de ces derniers.

7. Système de caisson selon l'une des revendications 1 à 6, **caractérisé en ce que** des structures alvéolées (10.3), des mousses ou des matières premières renouvelables sont intégrées dans le caisson (1).

8. Système de caisson selon l'une des revendications 1 à 7, **caractérisé en ce que** le caisson (1) est blindé.

9. Système de caisson selon l'une des revendications 1 à 8, **caractérisé en ce que** le caisson (1) constitue une partie d'un véhicule ou peut être monté sur un véhicule.

10. Système d'abri modulaire selon la revendication 9, **caractérisé en ce que** le caisson (1) présente un dispositif de réception permettant de le monter sur un véhicule ou dans un container (C).

11. Système de caisson selon l'une des revendications 1 à 10, **caractérisé en ce qu'**entre le système de réception (2) non solidaire du fond du caisson (1) et le fond du caisson (1), se trouve un écart (A)/écartement.

12. Système d'abri modulaire selon la revendication 11, **caractérisé en ce que** des structures (9) fixes d'absorption de chocs et/ou d'énergie et/ou d'impacts sont montés dans cet écart (A)/écartement.

13. Système d'abri modulaire selon la revendication 12, **caractérisé en ce que** les structures (9) présentent une structure de rigidification consistant en un support de fond (9.1) ou un châssis (11).

14. Système d'abri modulaire selon la revendication 13, **caractérisé en ce que** la structure de rigidification est une structure homogène ou perforée en aluminium, en magnésium, en acier, en composite renforcé de fibres ou une combinaison de ces derniers.

15. Système de caisson selon l'une des revendications 12 à 14, **caractérisé en ce que** le système de réception (2) est positionné par-dessus les structures (9) à l'aide d'un système de fixation qui vient s'accrocher au caisson (1) au-dessus de l'écart A)/écartement entre le système de réception (2) et le fond.

16. Système de caisson selon l'une des revendications 1 à 15, **caractérisé en ce que** le système de réception (2) présente un élément de base / une plaque de base (3).

17. Système de caisson selon l'une des revendications 1 à 16, **caractérisé en ce que** le système de réception (2) présente un ou plusieurs sièges (4).

18. Système d'abri modulaire selon la revendication 17, **caractérisé en ce que** chaque siège (4) est relié d'un côté à l'élément de base / la plaque de base (3) et présente de l'autre côté une liaison avec le caisson (1) par le biais du système de fixation.

19. Système d'abri modulaire selon les revendications 17 ou 18, **caractérisé en ce que** le système de fixation consiste en un ou plusieurs éléments de fixation/montants primaires (6) articulés et situés dans la partie supérieure ou latérale du caisson (1), lesquels présentent une liaison avec les sièges (4).

20. Système de caisson selon l'une des revendications 16 à 19, **caractérisé en ce que** le système de fixation consiste en un ou plusieurs éléments de fixation/montants secondaires (6) articulés et situés dans la partie supérieure ou latérale du caisson (1), lesquels présentent une liaison avec l'élément de base / la plaque de base (3).

21. Système de caisson selon l'une des revendications 15 à 20, **caractérisé en ce que** le système de fixation est conçu de sorte à absorber les chocs dans un ou plusieurs degrés de liberté.

22. Système de caisson selon l'une des revendications 17 à 21, **caractérisé en ce que** les sièges (4) sont montés sur le système de fixation de façon à absorber les chocs.

23. Système de caisson selon l'une des revendications 16 à 22, **caractérisé en ce que** l'élément de base / la plaque de base (3) est posé directement sur les structures (9) ou au-dessus d'une entre-couche.

24. Système de caisson selon l'une des revendications 16 à 23, **caractérisé en ce que** l'élément de base / la plaque de base (3) ne repose pas contre le caisson (1).

25. Système de caisson selon l'une des revendications 17 à 24, **caractérisé en ce que** les sièges (4) peuvent absorber les chocs et les énergies.

26. Système de caisson selon l'une des revendications 17 à 25, **caractérisé en ce que** les dossiers (4.1) des deux sièges (4) sont face à face et que leurs assises (4.2) sont divergentes.

27. Système de caisson selon l'une des revendications 17 à 26, **caractérisé en ce que** les assises (4.2) des sièges (4) sont montées à hauteur d'assise au-dessus de l'élément de base / la plaque de base (3) et qu'ils sont reliés à la plaque de base (3) par le biais d'éléments de liaison (5) consistant en des barres et/ou des plaques.

28. Système de caisson selon l'une des revendications 17 à 27, **caractérisé en ce que** les sièges (4) et/ou le système de fixation peuvent être démontés/sortis du caisson (1).
